# EUROPÄISCHE PATENTSCHRIFT

(11) **EP 4 258 310 B1**
(45) Veröffentlichungstag und Bekanntmachung des Hinweises auf die Patenterteilung: **20.08.2025**
(21) Anmeldenummer: 23162690.4
(22) Anmeldetag: 17.03.2023
(51) Int. Cl.: H01H 9/34, H01H 9/02, H01H 71/02, H01H 73/06

(54) **GEHÄUSEMODUL, ISOLIERSTOFFGEHÄUSE UND SCHUTZSCHALTGERÄT**
HOUSING MODULE, INSULATING MATERIAL HOUSING AND PROTECTIVE SWITCHING DEVICE
MODULE DE BOÎTIER, BOÎTIER EN MATIÈRE ISOLANTE ET APPAREIL DE COMMUTATION DE PROTECTION

(30) Priorität: 06.04.2022 DE 102022203408
(43) Veröffentlichungstag der Anmeldung: 11.10.2023
(73) Patentinhaber: Siemens Aktiengesellschaft, 80333 München (DE)
(72) Erfinder: Ness, Franz, 84092 Bayerbach (DE)
(74) Vertreter: Siemens Patent Attorneys

(56) Entgegenhaltungen:
- DE-A1- 102008 017 472
- FR-A1- 2 699 730
- US-A1- 2016 042 898

## Beschreibung

Die Erfindung betrifft ein Gehäusemodul für ein aus mehreren Gehäusemodulen gebildetes Isolierstoffgehäuse eines modularen, d.h. aus mehreren Modulen gebildeten, mehrpoligen Niederspannungs-Schutzschaltgerätes, mit einer Frontseite, einer der Frontseite gegenüberliegende Befestigungsseite sowie mit die Front- und die Befestigungsseite verbindenden ersten und zweiten Schmal- und Breitseiten. Weiterhin betrifft die Erfindung ein modulares Isolierstoffgehäuse für ein modulares mehrpoliges Schutzschaltgerät sowie ein modulares mehrpoliges Schutzschaltgerät mit einem aus mehreren Gehäusemodulen gebildeten Isolierstoffgehäuse.

Elektromechanische Schutzschaltgeräte - beispielsweise Leistungsschalter, Leitungsschutzschalter, Fehlerstromschutzschalter sowie Lichtbogen- bzw. Brandschutzschalter - dienen der Überwachung sowie der Absicherung eines elektrischen Stromkreises und werden insbesondere als Schalt- und Sicherheitselemente in elektrischen Energieversorgungs- und Verteilnetzen eingesetzt. Zur Überwachung und Absicherung des elektrischen Stromkreises wird das Schutzschaltgerät über zwei oder mehrere Anschlussklemmen mit einer elektrischen Leitung des zu überwachenden Stromkreises elektrisch leitend verbunden, um bei Bedarf den elektrischen Strom in der jeweiligen überwachten Leitung zu unterbrechen. Das Schutzschaltgerät weist hierzu zumindest einen Schaltkontakt auf, der bei Auftreten eines vordefinierten Zustandes - beispielsweise bei Erfassen eines Kurzschlusses oder eines Fehlerstromes - geöffnet werden kann, um den überwachten Stromkreis vom elektrischen Leitungsnetz zu trennen. Derartige Schutzschaltgeräte sind auf dem Gebiet der Niederspannungstechnik auch als Reiheneinbaugeräte bekannt.

Leistungsschalter sind dabei speziell für hohe Ströme ausgelegt. Ein Leitungsschutzschalter (sogenannter LS-Schalter), welcher auch als "Miniature Circuit Breaker" (MCB) bezeichnet wird, stellt in der Elektroinstallation eine sogenannte Überstromschutzeinrichtung dar und wird insbesondere im Bereich der Niederspannungsnetze eingesetzt. Leistungsschalter und Leitungsschutzschalter garantieren ein sicheres Abschalten bei Kurzschluss und schützen Verbraucher und Anlagen vor Überlast, beispielsweise vor Beschädigung der elektrischen Leitungen durch zu starke Erwärmung in Folge eines zu hohen elektrischen Stromes. Sie sind dazu ausgebildet, einen zu überwachenden Stromkreis im Falle eines Kurzschlusses oder bei Auftreten einer Überlast selbsttätig abzuschalten und damit vom übrigen Leitungsnetz zu trennen. Leistungsschalter und Leitungsschutzschalter werden daher insbesondere als Schalt- und Sicherheitselemente zur Überwachung und Absicherung eines elektrischen Stromkreises in elektrischen Energieversorgungsnetzen eingesetzt. Leitungsschutzschalter sind aus den Druckschriften DE 10 2015 217 704 A1, EP 2 980 822 A1, DE 10 2015 213 375 A1, DE 10 2013 211 539 A1 oder auch EP 2 685 482 B1 prinzipiell vorbekannt.

Zur Unterbrechung einer einzigen Phasenleitung wird in der Regel ein einpoliger Leitungsschutzschalter verwendet, welche üblicher Weise eine Breite von einer Teilungseinheit (entspricht ca. 18mm) aufweist. Für dreiphasige Anschlüsse werden (alternativ zu drei einpoligen Schaltgeräten) dreipolige Leitungsschutzschalter eingesetzt, welche dementsprechend eine Breite von drei Teilungseinheiten (entspricht ca. 54mm) aufweisen. Jedem der drei Phasenleiter ist dabei ein Pol, d.h. eine Schaltstelle zugeordnet. Soll zusätzlich zu den drei Phasenleitern auch noch der Neutralleiter unterbrochen werden, spricht man von vierpoligen Geräten, welche vier Schaltstellen aufweisen: drei für die drei Phasenleiter sowie einen für den gemeinsamen Neutralleiter.

Daneben existieren kompakte Leitungsschutzschalter, welche bei einer Gehäusebreite von nur einer Teilungseinheit zwei Schaltkontakte für je eine Anschlussleitung, d.h. entweder für zwei Phasenleitungen (Kompaktleitungsschutzschalter vom Typ 1+1) oder für eine Phasenleitung und den Neutralleiter (Kompaktleitungsschutzschalter vom Typ 1+N), bereitstellen. Derartige Kompakt-Schutzschaltgeräte in Schmalbauweise sind beispielsweise aus den Druckschriften DE 10 2004 034 859 A1, EP 1 191 562 B1 oder EP 1 473 750 A1 prinzipiell vorbekannt.

Ein Fehlerstromschutzschalter ist eine Schutzeinrichtung zur Gewährleistung eines Schutzes gegen einen gefährlichen Fehlerstrom in einer elektrischen Anlage. Ein derartiger Fehlerstrom - welcher auch als Differenzstrom bezeichnet wird - tritt auf, wenn ein spannungsführendes Leitungsteil einen elektrischen Kontakt gegen Erde aufweist. Dies ist beispielsweise dann der Fall, wenn eine Person ein spannungsführendes Teil einer elektrischen Anlage berührt: in diesem Fall fließt der Strom als Fehlerstrom durch den Körper der betreffenden Person gegen die Erdung ab. Zum Schutz gegen derartige Körperströme muss der Fehlerstromschutzschalter bei Auftreten eines derartigen Fehlerstroms die elektrische Anlage schnell und sicher allpolig vom Leitungsnetz trennen. Im Allgemeinen Sprachgebrauch werden anstelle des Begriffs "Fehlerstromschutzschalter" auch die Begriffe FI-Schutzschalter (kurz: FI-Schalter), Differenzstromschutzschalter (kurz: DI-Schalter) oder RCD (für "Residual Current Protective Device") gleichwertig verwendet.

Zur Erfassung eines derartigen Fehler- bzw. Differenzstromes wird die Größe des Stromes in einer zu einem elektrischen Verbraucher hinführenden Leitung, beispielsweise einer Phasenleitung, mit der Größe des Stromes in einer vom elektrischen Verbraucher zurückführenden Leitung, beispielsweise eines Neutralleiters, mit Hilfe eines sogenannten Summenstromwandlers verglichen. Dieser weist einen ringförmigen Magnetkern auf, durch den die Primärleiter (hin- und rückführende elektrische Leitungen) hindurchgeführt sind. Der Magnetkern selbst ist mit einem Sekundärleiter bzw. einer Sekundärwicklung umwickelt. Im fehlerstromfreien Zustand ist die Summe der zu dem Verbraucher hinfließenden elektrischen Ströme gleich der Summe der vom Verbraucher zurückfließenden elektrischen Ströme. Werden die Ströme vektoriell, d.h. richtungsbezogen bzw. vorzeichenbehaftet, addiert, so folgt hieraus, dass die vorzeichenbehaftete Summe der elektrischen Ströme in den Hin- und Rückleitungen im fehlerstromfreien Zustand gleich Null ist: im Sekundärleiter wird kein Induktionsstrom induziert. Im Unterschied dazu ist im Falle eines Fehler- bzw. Differenzstromes, der gegen Erde abfließt, die im Summenstromwandler erfasste Summe der hin- beziehungsweise zurückfließenden elektrischen Ströme ungleich Null. Die dabei auftretende Stromdifferenz führt dazu, dass an der Sekundärwicklung eine der Stromdifferenz proportionale Spannung induziert wird, wodurch ein Sekundärstrom in der Sekundärwicklung fließt. Dieser Sekundärstrom dient als Fehlerstromsignal und führt nach Überschreiten eines vorbestimmten Wertes zum Auslösen des Schutzschaltgerätes und infolgedessen - durch Öffnen des zumindest einen Schaltkontaktes des Schutzschaltgerätes - zur Abschaltung des entsprechend abgesicherten Stromkreises.

Bei Fehlerstromschutzschaltern wird ferner zwischen netzspannungsabhängigen und netzspannungsunabhängigen Gerätetypen unterschieden: während netzspannungsabhängige Fehlerstromschutzschalter eine Steuerungselektronik mit einem Auslöser aufweisen, die zur Erfüllung ihrer Funktion auf eine Hilfs- oder Netzspannung angewiesen ist, benötigen netzspannungsunabhängige Fehlerstromschutzschalter zur Realisierung der Auslösefunktion keine Hilfs- oder Netzspannung, sondern weisen zur Realisierung der netzspannungsunabhängigen Auslösung in der Regel einen etwas größeren Summenstromwandler auf, wodurch ein größerer Induktionsstrom in der Sekundärwicklung erzeugt werden kann.

Lichtbogen- bzw. Brandschutzschalter werden zur Erfassung von Störlichtbögen, wie sie an einer defekten Stelle einer elektrischen Leitung - beispielsweise einer lockeren Kabelklemme oder aufgrund eines Kabelbruchs - auftreten können, verwendet. Tritt der Störlichtbogen elektrisch in Reihe zu einem elektrischen Verbraucher auf, so wird der normale Betriebsstrom im Regelfall nicht überschritten, da er durch den Verbraucher begrenzt wird. Aus diesem Grund wird der Störlichtbogen von einer herkömmlichen Überstromschutzeinrichtung, beispielsweise einer Schmelzsicherung oder eines Leitungsschutzschalters, nicht erfasst. Zur Ermittlung, ob ein Störlichtbogen vorliegt, werden durch den Brandschutzschalter sowohl der Spannungsverlauf als auch der Stromverlauf über die Zeit gemessen und hinsichtlich der für einen Störlichtbogen charakteristischen Verläufe analysiert und ausgewertet. In der (englischsprachigen) Fachliteratur werden derartige Schutzeinrichtungen zur Erfassung von Störlichtbögen als "Arc Fault Detection Device" (abgekürzt: AFDD) bezeichnet. Im nordamerikanischen Raum ist die Bezeichnung "Arc Fault Circuit Interrupter" (abgekürzt: AFCI) geläufig.

Daneben existieren auch Gerätebauformen, bei denen die Funktionalität eines Fehlerstrom-Schutzschalters mit der Funktionalität eines Leitungsschutzschalters kombiniert wird: derartige kombinierte Schutzschaltgeräte werden im Deutschen als FI/LS oder im englischsprachigen Raum als RCBO (für Residual current operated Circuit-Breaker with Overcurrent protection) bezeichnet. Diese Kombigeräte haben im Vergleich zu getrennten Fehlerstrom- und Leitungsschutzschaltern den Vorteil, dass jeder Stromkreis seinen eigenen Fehlerstrom-Schutzschalter aufweist: Normalerweise wird ein einziger FehlerstromSchutzschalter für mehrere Stromkreise verwendet. Kommt es zu einem Fehlerstrom, werden somit in Folge alle abgesicherten Stromkreise abgeschaltet. Durch den Einsatz von RCBOs wird nur der jeweils betroffene Stromkreis abgeschaltet.

Tendenziell werden immer mehr Funktionalitäten in die Geräte integriert, d.h. es werden kombinierte Schutzschaltgeräte entwickelt, welche den Funktionsumfang mehrerer Einzelgeräte abdecken: neben den vorstehend bereits beschriebenen FI/LS-Schutz-schalt-geräten, welche den Funktionsumfang eines herkömmlichen Fehlerstromschutzschalters (FI) mit dem eines Leitungsschutzschalters (LS) kombinieren, existieren weitere Bauformen, bei denen beispielsweise die Funktionalität eines Brandschutzschalters in bestehende Geräte wie MCB, RCD oder RCBO/FILS integriert werden.

Beispielsweise ist in der Druckschrift US 2016/0042898 A1 ein mehrpoliges Niederspannungs-Schutzschaltgerät offenbart, dessen Isolierstoffgehäuse aus mehreren Gehäusemodulen besteht, welche jeweils eine Frontseite, eine dieser gegenüberliegende Befestigungsseite sowie die Front- und die Befestigungsseite verbindende erste und zweite Schmal- und Breitseiten aufweisen, wobei ein Elektronikmodul zwischen einem ersten und einem zweiten Mechanikmodul angeordnet ist.

Insbesondere bei mehrpoligen Fehlerstromschutzschaltern - ob als reiner Fehlerstromschutzschalter oder als kombinierte Gerätebauform wie FI/LS bzw. RCBO - sowie bei kombinierten Schutzschaltgeräten werden elektronische Funktionsbaugruppen verwendet, welche zur Realisierung einer oder mehrerer Funktionen des jeweiligen Schutzschaltgerätes benötigt werden. Derartige elektronische Funktionsbaugruppen müssen einerseits in dem dicht gepackten Gehäuse des jeweiligen Schutzschaltgerätes angeordnet, d.h. aufgenommen und gehaltert, sein, als auch mit elektrischer Energie versorgt werden.

Es ist deshalb die Aufgabe der vorliegenden Erfindung ein Gehäusemodul für ein aus mehreren Gehäusemodulen gebildetes Isolierstoffgehäuse eines modularen mehrpoligen Niederspannungs-Schutzschaltgerätes, ein modulares Isolierstoffgehäuse für ein modulares mehrpoliges Schutzschaltgerät sowie ein modulares mehrpoliges Niederspannungs-Schutzschaltgerät mit einem aus mehreren Gehäusemodulen gebildeten Isolierstoffgehäuse bereitzustellen, welche sich durch eine verbesserte Nutzung des zur Verfügung stehenden Bauraumes auszeichnen.

Diese Aufgabe wird erfindungsgemäß durch das Gehäusemodul, das modulare Isolierstoffgehäuse sowie das modulare mehrpolige Niederspannungs-Schutzschaltgerät gemäß den unabhängigen Ansprüchen gelöst. Vorteilhafte Ausgestaltungen des erfindungsgemäßen Gehäusemoduls, des erfindungsgemäßen Isolierstoffgehäuse sowie des erfindungsgemäßen Niederspannungs-Schutzschaltgerätes sind Gegenstand der abhängigen Ansprüche.

Das erfindungsgemäße Gehäusemodul für ein aus mehreren Gehäusemodulen gebildetes Isolierstoffgehäuse eines modularen, mehrpoligen Niederspannungs-Schutzschaltgerätes weist eine Frontseite, eine der Frontseite gegenüberliegende Befestigungsseite sowie die Front- und die Befestigungsseite verbindende erste und zweite Schmal- und Breitseiten auf. Dabei weist die erste Breitseite eine Ausströmöffnung auf, durch die bei Öffnung eines Schaltkontakts des Niederspannungs-Schutzschaltgerätes auftretende Schaltgase seitlich aus dem Gehäusemodul ausströmen können. Die zweite Breitseite weist im Bereich der ersten Schmalseite eine Vertiefung auf, die sich bis zur ersten Schmalseite hin erstreckt und in die die Ausströmöffnung eines benachbart angeordneten Gehäusemoduls einmündet, wodurch ein Ausblaskanal gebildet ist, um bei Öffnung des Schaltkontakts auftretende Schaltgase an der ersten Schmalseite über zumindest eine zweite Öffnung aus dem Gehäusemodul herauszuführen.

Unter dem Begriff "modular" ist die Aufteilung eines Ganzen, beispielsweis eines Produkts, in einzelne Teile, die als Module, Komponenten, Bauelemente, Baugruppen oder Bausteine bezeichnet werden, zu verstehen. Bei geeigneter Form und Funktion können sie zusammengefügt werden oder über entsprechende Schnittstellen interagieren, wobei je nach Zusammensetzung unterschiedliche Produkte aus den einzelnen Teilen entstehen können. In diesem Sinne ist das Isolierstoffgehäuse aus mehreren Gehäusemodulen aufgebaut, das mehrpolige Niederspannungs-Schutzschaltgerät entsprechend aus mehreren Gerätemodulen, welche jeweils ein Gehäusemodul aufweisen, welches je nach Verwendung unterschiedlich bestückt sein kann.

Die erste Breitseite eines Gehäusemoduls weist eine Ausströmöffnung auf durch welche die Schaltgase aus dem Inneren des Gehäusemoduls nach außen strömen können. Die in der, der ersten Breitseite gegenüberliegenden, zweiten Breitseite ausgebildete Vertiefung bildet zusammen mit der Ausströmöffnung eines benachbart, d.h. Breitseite an Breitseite, angeordneten Gehäusemoduls einem Ausblaskanal, welcher durch zumindest eine an der ersten Schmalseite angeordneten zweiten Öffnung ins Freie mündet. Hierzu korrespondiert die in der zweiten Breitseite ausgebildete Vertiefung hinsichtlich ihrer Lage/Position mit der Lage/Position der in der ersten Breitseite des benachbart angeordneten Gehäusemoduls ausgebildeten Ausströmöffnung. Unter dem Begriff "Vertiefung" ist dabei der Teil der im Wesentlichen ebenen zweiten Breitseite zu verstehen, der tiefer als seine Umgebung, d.h. der restlichen Breitseite, gelegen ist. Entsprechend kann die Vertiefung auch als Einbuchtung, Senke oder Mulde bezeichnet werden.

Indem die Schaltgase an der Schmalseite und nicht an der Befestigungsseite aus dem Gehäusemodul bzw. dem Isolierstoffgehäuse herausgeführt werden, kann der Bauraum im Bereich der Befestigungsseite zur Anordnung weiterer Komponenten des Niederspannungs-Schutzschaltgerätes, beispielsweise zur Aufnahme einer Leiterplatte, genutzt werden. Die Gestaltung des Auslasskanals zur Führung der Schaltgase erfolgt dabei nicht innerhalb eines einzelnen Gehäusemoduls, sondern durch das Zusammenwirken zweier zueinander benachbart angeordneter Gehäusemodule. Auf diese Weise entsteht ein isolierter Auslasskanal, welcher die Schaltgase an der ersten Schmalseite aus dem Gehäuse herausführt und sich durch einen geringen Platzbedarf auszeichnet.

In einer vorteilhaften Weiterbildung weist das Gehäusemodul einen ersten Aufnahmeraum auf, welcher dazu vorgesehen und ausgebildet ist, einen Schaltkontakt des Niederspannungs-Schutzschaltgerätes aufzunehmen und zu haltern. Weiterhin weist das Gehäusemodul einen zweiten Aufnahmeraum auf, welcher dazu vorgesehen und ausgebildet ist, im Bereich der ersten Schmalseite ein elektrisches Anschlusselement des Niederspannungs-Schutzschaltgerätes aufzunehmen und zu haltern, wodurch die beim Öffnen des Schaltkontakts auftretenden Schaltgase an den elektrischen Anschlusselement vorbei zur ersten Schmalseite geführt sind.

Da im Bereich der ersten Schmalseite das elektrisches Anschlusselement, beispielsweise eine Schraubklemme, in dem Gehäusemodul angeordnet werden soll, bietet das erfindungsgemäße Gehäusemodul die Möglichkeit, die Schaltgase, welche beim Öffnen des Schaltkontakts entstehen, aus dem ersten Aufnahmeraum über den Ausblaskanal, welcher durch die Ausströmöffnung sowie die am benachbart angeordneten Gehäusemodul ausgebildete Vertiefung gebildet ist, an dem zweiten Aufnahmeraum, in dem das Anschlusselement angeordnet ist, elektrisch isoliert vorbeizuführen. Auf diese Weise ist eine kompakte, platzsparende Lösung für die Gestaltung des Ausblaskanals realisierbar.

In einer weiteren vorteilhaften Weiterbildung weist das Gehäusemodul einen zwischen dem ersten und dem zweiten Aufnahmeraum angeordneten dritten Aufnahmeraum auf, welcher dazu vorgesehen und ausgebildet ist, eine Lichtbogen-Löschvorrichtung des Niederspannungs-Schutzschaltgerätes aufzunehmen und zu haltern, wobei die Ausströmöffnung in den dritten Aufnahmeraum einmündet.

Da der dritte Aufnahmeraum ist in der Regel zwischen dem ersten Aufnahmeraum und dem zweiten Aufnahmeraum angeordnet ist, bietet dies die Möglichkeit, die Ausströmöffnung an einem in Richtung des zweiten Aufnahmeraums weisenden Endes des dritten Aufnahmeraums anzuordnen, so dass die beim Öffnen des Schaltkontakts im ersten Aufnahmeraum entstehenden Schaltgase durch den dritten Aufnahmeraum hindurch zur Ausströmöffnung geführt werden. Auf diese Weise können auch heiße Gase, die beim Brennen des Lichtbogens in der Lichtbogen-Löschkammer entstehen, auf kurzem Wege aus dem Gehäusemodul herausgeführt werden.

In einer weiteren vorteilhaften Weiterbildung weist das Gehäusemodul einen vierten Aufnahmeraum zu Aufnahme einer Flachbaugruppe auf, wobei der vierte Aufnahmeraum in einer Breitenrichtung B durch die erste Breitseite des Gehäusemoduls sowie in der Gegenrichtung durch die zweite Breitseite des benachbart angeordneten Gehäusemoduls begrenzt ist.

Durch die Anordnung zweier Gehäusemodule "Breitseite an Breitseite", d.h. die erste Breitseite des ersten Gehäusemoduls liegt unmittelbar an der zweiten Breitseite des zweiten Gehäusemoduls, ist nicht nur der Ausblaskanal durch das Zusammenwirken der Ausströmöffnung des ersten Gehäusemoduls mit der Vertiefung des zweiten Gehäusemoduls gebildet, sondern zusätzlich ein Schutz der Flachbaugruppe, die zwischen der ersten Breitseite des ersten Gehäusemoduls und der zweiten Breitseite des zweiten Gehäusemoduls aufgenommen, elektrisch isoliert und damit geschützt ist. Somit ist kein zusätzlicher Schutz der Flachbaugruppe gegen Umgebungseinflüsse wie Staub, Schmutz oder Feuchtigkeit erforderlich -die Flachbaugruppe ist platzsparend im Gehäusemodul untergebracht.

In einer weiteren vorteilhaften Weiterbildung ist das Gehäusemodul dazu vorgesehen und ausgebildet Komponenten eines Leitungsschutzschalters oder Fehlerstromschutzschalters und/oder eines Brandschutzschalters aufzunehmen und zu haltern.

Dadurch können auf einfache Art und Weise bei gleichzeitig geringer Teilevielfalt verschiedene Gerätevarianten eines Niederspannungs-Schutzschaltgerätes gebildet werden, indem die Gehäusemodule entsprechend bestückt und zu einem Isolierstoffgehäuse eines Leitungsschutzschalters, eines Fehlerstromschutzschalters, eines Brandschutzschalters, etc. oder einer Kombination der Funktionalitäten dieser Niederspannungs-Schutzschaltgeräte kombiniert werden. Auch weitere Funktionen, beispielsweise eine Mess- oder Kommunikationsfunktion, können auf einfache Art und Weise in eines der Gehäusemodule des Isolierstoffgehäuses integriert werden. Die Lagerhaltungs- und Logistik- sowie die Herstell- und Montagekosten können dadurch deutlich reduziert werden.

Das erfindungsgemäße modulare Isolierstoffgehäuse für ein modular aufgebautes, mehrpoliges Niederspannungs-Schutzschaltgerät weist eine Frontseite, eine der Frontseite gegenüberliegende Befestigungsseite sowie die Front- und die Befestigungsseite verbindende Schmal- und Breitseiten auf und ist aus einem ersten Gehäusemodul der vorstehend beschriebenen Art sowie zumindest einem weiteren, in einer Breitenrichtung B daneben angeordneten und daran befestigten zweiten Gehäusemodul der vorstehend beschriebenen Art gebildet. Das zweite Gehäusemodul ist dabei dazu vorgesehen und ausgebildet, einen Schaltkontakt aufzunehmen und zu haltern, wobei zwischen dem ersten Gehäusemodul und dem zweiten Gehäusemodul ein Ausblaskanal ausgebildet ist, um bei der Öffnung des Schaltkontakts auftretende Schaltgase an der ersten Schmalseite aus dem Isolierstoffgehäuse herauszuführen.

Hinsichtlich der prinzipiellen Vorteile des erfindungsgemäßen Isolierstoffgehäuses wird auf die vorstehenden Ausführungen die Vorteile des erfindungsgemäßen Gehäusemoduls betreffend verwiesen. Bei dem aus dem ersten und dem zweiten Gehäusemodul gebildeten Isolierstoffgehäuse ist der Ausblaskanal folglich nicht innerhalb eines der Gehäusemodule, sondern zwischenmodular, d.h. zwischen der zweiten Breitseite des ersten Gehäusemoduls und der ersten Breitseite des zweiten, benachbart angeordneten Gehäusemoduls, ausgebildet. Da Schaltgase an der Schmalseite und nicht an der Befestigungsseite aus dem Isolierstoffgehäuse herausgeführt werden, kann der dadurch frei gewordene Bauraum im Bereich der Befestigungsseite zur Anordnung weiterer Komponenten des Niederspannungs-Schutzschaltgerätes, beispielsweise zur Aufnahme einer Leiterplatte, genutzt werden.

Neben dem Schaltkontakt können im zweiten Gehäusemodul - ebenso wie im ersten Gehäusemodul - je nach Ausführung des zu realisierenden Niederspannungs-Schutzschaltgerätes weitere Komponenten, beispielsweise magnetische oder thermische Auslöseeinheiten, weitere Schaltkontakte, Lichtbogen-Löschvorrichtungen oder Elektronik zur Realisierung weiterer Funktionen, z.B. Kommunikations- oder Analysefunktionen, des Niederspannungs-Schutzschaltgerätes, angeordnet, d.h. aufgenommen und gehaltert sein.

In einer vorteilhaften Weiterbildung weist das modulare Isolierstoffgehäuse zumindest ein weiteres, drittes Gehäusemodul der vorstehend beschriebenen Art auf, welches in der Breitenrichtung B neben dem zweiten Gehäusemodul angeordnet ist. Das dritte Gehäusemodul ist dabei dazu vorgesehen und ausgebildet, einen Schaltkontakt aufzunehmen und zu haltern, wobei zwischen dem zweiten Gehäusemodul und dem dritten Gehäusemodul ein weiterer Ausblaskanal ausgebildet ist, um bei der Öffnung des Schaltkontakts auftretende Schaltgase an der ersten Schmalseite aus dem Isolierstoffgehäuse herauszuführen.

Mithilfe des weiteren, dritten Gehäusemoduls, welches in Breitenrichtung neben dem zweiten Gehäusemodul angeordnet und daran befestigt ist, können weitere mehrpolige Niederspannungs-Schutzschaltgeräte unterschiedlicher Ausprägung gebildet werden, d.h. je nach Bedarf können verschiedene Komponenten des mehrpolige Niederspannungs-Schutzschaltgerätes in den einzelnen Gehäusemodulen angeordnet, d.h. aufgenommen und gehaltert sein. Zwischen den Breitseiten zweier benachbart angeordneter Gehäusemodule ist dabei immer ein Ausblaskanal ausgebildet, dessen zweite Öffnung jeweils in die Schmalseite mündet, um die beim Öffnen des Schaltkontakts auftretenden Schaltgase dort aus dem Gehäusemodul herauszuführen. D.h. ein aus drei Gehäusemodulen gebildetes Isolierstoffgehäuse weist zwei derart gebildete Ausblaskanäle, ein aus vier Gehäusemodulen gebildetes Isolierstoffgehäuse entsprechend drei Ausblaskanäle auf.

In einer weiteren vorteilhaften Weiterbildung weist das modulare Isolierstoffgehäuse einen Deckel auf, welcher die erste Breitseite des ersten Gehäusemoduls zumindest teilweise abdeckt. Der Deckel dient dazu, die außen liegende Breitseite des Isolierstoffgehäuses, an der kein weiteres Gehäusemodul angeordnet und befestigt ist, abzudecken und somit vor Umgebungseinflüssen wie Staub, Schmutz oder Feuchtigkeit zu schützen.

Das erfindungsgemäße modulare mehrpolige Niederspannungs-Schutzschaltgerät weist ein aus mehreren Gehäusemodulen gebildetes Isolierstoffgehäuse der vorstehend beschriebenen Art auf.

Hinsichtlich der prinzipiellen Vorteile des erfindungsgemäßen modularen mehrpoligen Niederspannungs-Schutzschaltgerätes wird auf die vorstehenden Ausführungen die Vorteile des erfindungsgemäßen Isolierstoffgehäuses sowie des erfindungsgemäßen Gehäusemoduls betreffend verwiesen. Durch die modulare Erweiterbarkeit des Isolierstoffgehäuses durch Anordnung weiterer Gehäusemodule können verschiedene Ausführungsformen des erfindungsgemäßen modularen mehrpoligen Niederspannungs-Schutzschaltgerätes gebildet werden, ohne dass hierzu eine Vielzahl unterschiedlicher Gehäusebauformen erforderlich wäre. Diese Variantenvielfalt wird somit Baukasten-basiert erreicht, ohne die Teile- und Komponentenvielfalt deutlich zu erhöhen. Die Herstellungs- und Logistikkosten können dadurch deutlich reduziert werden.

In einer vorteilhaften Weiterbildung ist das Niederspannungs-Schutzschaltgerät als zwei-, drei- oder vier-poliger Leitungsschutzschalter ausgebildet und weist entsprechend zwei, drei oder vier identische Gehäusemodule auf, welche Breitseite an Breitseite nebeneinander angeordnet sowie aneinander befestigt sind, wobei zwischen zwei benachbarten Gehäusemodulen jeweils ein Ausblaskanal gebildet ist.

In einer weiteren vorteilhaften Weiterbildung ist das Niederspannungs-Schutzschaltgerät als zwei-, drei- oder vier-poliger Fehlerstromschutzschalter ausgebildet und weist ein erstes Gehäusemodul auf, in dem Komponenten zur Erfassung und Auslösung bei Auftreten eines Fehlerstroms aufgenommen und gehaltert sind. Weiterhin weist das Niederspannungs-Schutzschaltgerät ein bis drei weitere Gehäusemodule auf, in denen Komponenten zur Erfassung und Auslösung bei Auftreten eines Kurzschlusses oder einer elektrischen Überlast aufgenommen und gehaltert sind. Das erste Gehäusemodul sowie die ein bis drei weiteren Gehäusemodule sind dabei Breitseite an Breitseite nebeneinander angeordnet sowie aneinander befestigt, wobei zwischen zwei benachbarten Gehäusemodulen jeweils ein Ausblaskanal gebildet ist.

Mit Hilfe des Baukasten-basierten Aufbaus des Isolierstoffgehäuses können sowohl mehrpolige Leitungsschutzschalter als auch mehrpolige Fehlerstromschutzschalter als auch mehrpolige Kombinationsgeräte wie FI/LS oder RCBO gebildet werden, welche bei Bedarf durch Anordnung weiterer Funktionsbaugruppen um weitere Funktionalitäten, bspw. die eines Brandschutzschalters, erweitert werden können.

In einer weiteren vorteilhaften Weiterbildung des Niederspannungs-Schutzschaltgerätes ist ein Summenstromwandler des mehrpoligen Fehlerstromschutzschalters in einem Gehäusemodul-übergreifenden fünften Aufnahmeraum angeordnet.

Zur Anordnung des Summenstromwandlers weist jedes der das mehrpolige Isolierstoffgehäuse bildenden Gehäusemodule einen fünften Aufnahmeraum auf, aus denen sich bei Anordnung der einzelnen Gehäusemodule ein modulübergreifender Aufnahmeraum ergibt, welcher groß genug dimensioniert ist, um den Summenstromwandler darin aufzunehmen und zu haltern.

In einer weiteren vorteilhaften Weiterbildung des Niederspannungs-Schutzschaltgerätes ist im vierten Aufnahmeraum zumindest eines der Gehäusemodule eine Flachbaugruppe angeordnet. Mit Hilfe der Flachbaugruppe können weitere Funktionen des modularen, mehrpoligen Niederspannungs-Schutzschaltgerätes, beispielsweise eine Kommunikations- oder AFDD-Funktionalität, durch Aufnahme der entsprechenden Funktionsbaugruppe in dem vierten Aufnahmeraum, realisiert werden.

In einer weiteren vorteilhaften Weiterbildung des Niederspannungs-Schutzschaltgerätes ist die nach außen weisende, erste Breitseite des ersten Gehäusemoduls zumindest teilweise durch einen Deckel abdeckt. Mit Hilfe des Deckels wird die außen liegende Breitseite des Isolierstoffgehäuses, an der kein weiteres Gehäusemodul angeordnet und befestigt ist, abgedeckt, d.h. verschlossen, und somit vor Umgebungseinflüssen wie Staub, Schmutz oder Feuchtigkeit geschützt.

Im Folgenden wird ein Ausführungsbeispiel eines Gehäusemoduls für ein aus mehreren Gehäusemodulen gebildetes Isolierstoffgehäuse eines modularen mehrpoligen Niederspannungs-Schutzschaltgerätes, eines modularen Isolierstoffgehäuses sowie eines modularen mehrpoligen Niederspannungs-Schutzschaltgerätes unter Bezug auf die beigefügten Figuren näher erläutert. In den Figuren sind:
- Figur 1: eine schematische Darstellung zum prinzipiellen Aufbau eines Niederspannungs-Schutzschaltgerätes in einer Seitenansicht;
- Figuren 2 und 3: schematische Darstellungen des erfindungsgemäßen Gehäusemoduls in verschiedenen Ansichten;
- Figuren 4 und 5: schematische Darstellungen des erfindungsgemäßen modularen Isolierstoffgehäuses in verschiedenen Ansichten;
- Figuren 6 bis 8: schematische Darstellungen des erfindungsgemäßen modularen mehrpoligen Niederspannungs-Schutzschaltgerätes in verschiedenen Ansichten;

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

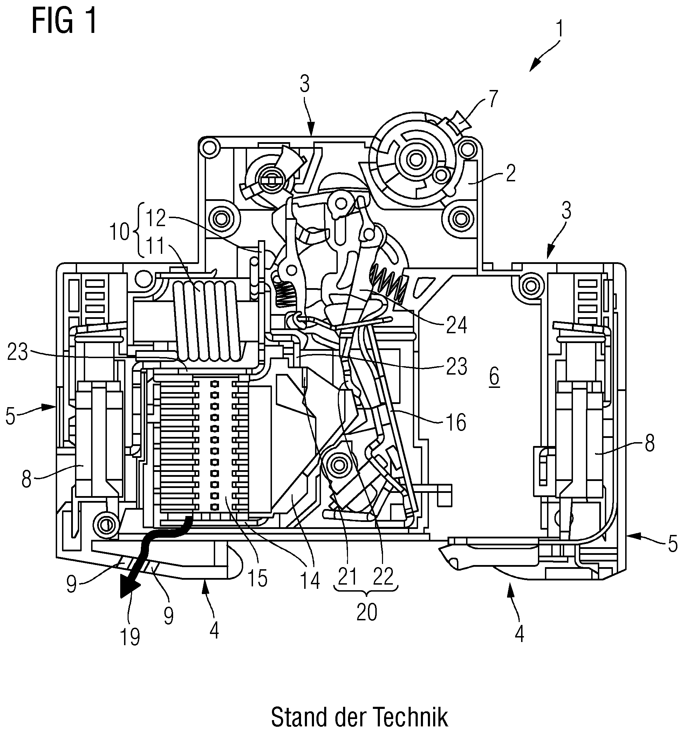

In Figur 1 ist der prinzipielle Aufbau eines aus dem Stand der Technik bekannten Niederspannungs-Schutzschaltgerätes 1, genauer: eines Niederspannungs-Leitungsschutzschalters - in einer Seitenansicht (Aufriss) auf eine der Breitseiten schematisch dargestellt, wobei ein vorderer Gehäusedeckel des Schutzschaltgerätes 1 weggelassen wurde, um einen Einblick in das Innere des Gerätes zu erhalten. Das Schutzschaltgerät 1 weist ein Isolierstoffgehäuse 2 auf, welches seinerseits eine Frontseite 3, eine der Frontseite 3 gegenüberüberliegende Befestigungsseite 4, sowie die Frontseite 3 und die Befestigungsseite 4 verbindende Schmalseiten 5 und Breitseiten 6 aufweist. Über die Befestigungsseite 4 ist das Schutzschaltgerät 1 an einer Trag- oder Hutschiene (nicht dargestellt) befestigbar. Im Bereich der Frontseite 3 ist ein Betätigungselement 7 angeordnet, mit dessen Hilfe das Niederspannungs-Schutzschaltgerät 1 manuell betätigt, d.h. ein- und ausgeschaltet werden kann.

Im Bereich der Schmalseiten 5 ist jeweils eine elektrische Anschlussklemme 8 angeordnet, welche den Eingangsanschluss sowie den Ausgangsanschluss bilden, über die das Niederspannungs-Schutzschaltgerät 1 mit elektrischen Anschlussleitern (nicht dargestellt) des zu überwachenden Stromkreises verbunden werden kann. Die Ausführung der Anschlusselemente 8-1 und 8-2 als Anschlussklemmen oder Schraubklemmen ist dabei beispielhaft und nicht erfindungswesentlich. Im Inneren des Isolierstoffgehäuses 2 sind die beiden Anschlusselemente 8-1 und 8-2 durch einen Strompfad, welcher mittels eines Schaltkontakts 20 unterbrochen werden kann, elektrisch leitend miteinander verbunden. Der Schaltkontakt 20 weist ein Festkontaktstück 21 sowie ein relativ dazu bewegbares Bewegkontaktstück 22 auf. Das Bewegkontaktstück 22 ist auf einem im Isolierstoffgehäuse 2 beweglich, d.h. schwenkbar oder drehbeweglich, gelagerten Bewegkontaktträger 24 montiert. Es ist jedoch auch möglich, das Bewegkontaktstück 22 in den Bewegkontaktträger 24 derart zu integrieren, dass ein geeigneter Teilbereich des Bewegkontaktträgers 24 als Bewegkontaktstück 22 fungiert und zusammen mit dem Festkontaktstück 21 den Schaltkontakt 20 bildet.

Das Festkontaktstück 21 ist auf einem Festkontaktträger 23 montiert, welcher Bestandteil eines Magnetjochs 12 ist. Das Magnetjoch 12 ist Bestandteil einer Kurzschluss-Auslöseeinrichtung 10 des Niederspannungs-Schutzschaltgerätes 1, welche im Falle eines Kurzschlusses ein Öffnen des Schaltkontakts bewirkt. Diese weist ferner eine Magnetspule 11 auf, welche zum einen mit dem Eingangsanschluss 8-1, zum anderen mit dem Magnetjoch 12 elektrisch leitend verbunden ist. Das Magnetjoch 12 weist zudem einen weiteren Abschnitt 23 auf, welcher sich in Richtung des oberen Endes einer unterhalb der Magnetspule 11 im Isolierstoffgehäuse 2 angeordneten Lichtbogen-Löschkammer 15 des Niederspannungs-Schutzschaltgerätes 1 erstreckt.

Über den Eingangsanschluss 8-1 und den Ausgangsanschluss 8-2, die beispielsweise als Anschlussklemmen ausgebildet sein können, wird das Niederspannungs-Schutzschaltgerät 1 in den zu schützenden elektrischen Stromkreis integriert. Sofern der Schaltkontakt 20 geschlossen ist, sind der Eingangsanschluss 8-1 und der Ausgangsanschluss 8-2 über einen im Inneren des Niederspannungs-Schutzschaltgerätes 1 verlaufenden Hauptstrompfad elektrisch leitend miteinander verbunden. Ein erster Abschnitt dieses Hauptstrompfads führt dabei vom Eingangsanschluss 8-1 über die Magnetspule 12 und das Magnetjoch 13 zum Festkontaktstück 21. Ein zweiter Abschnitt des Strompfads verbindet das Bewegkontaktstück 22 über eine als Thermobimetallelement 16 ausgebildete Überlast-Auslöseeinrichtung mit dem Ausgangsanschluss 8-2 des Schutzschaltgerätes 1.

Wird der Schaltkontakt 20 durch Wegbewegen des Bewegkontaktstücks 22 vom Festkontaktstück 21 geöffnet, so bildet sich - sofern zum Zeitpunkt der Öffnung eine elektrische Spannung am Schaltkontakt 20 anliegt - zwischen dem Festkontaktstück 21 und dem Bewegkontaktstück 22 ein Lichtbogen aus. Wird das Bewegkontaktstück 22 durch eine weiterführende Schwenkbewegung des Bewegkontaktträgers 24 weiter von dem Festkontaktstück wegbewegt, so springt der Lichtbogen ab einer bestimmten Länge auf eine sogenannte Lichtbogen-Leitschiene 14 über, welche den Lichtbogen zu einem unteren Ende der Lichtbogen-Löschkammer 15 leitet. Der Lichtbogen wandert dabei an der Festkontaktseite in Richtung des weiteren Abschnitts 23 und brennt dann zunächst zwischen diesem Abschnitt 23 und der Lichtbogen-Leitschiene 14, bevor er in die Lichtbogen-Löschkammer 15 getrieben wird. Die Lichtbogen-Löschkammer 15 dient der Löschung eines beim Öffnen des stromdurchflossenen Schaltkontakts 20 auftretenden Lichtbogens und weist hierzu mehrere parallel zueinander angeordnete, voneinander beabstandeter Löschbleche auf. Trifft der Lichtbogen auf die Löschbleche, so wird er in mehrere Teillichtbögen aufgeteilt, welche anschließend in Reihe geschaltet zwischen den einzelnen Löschblechen brennen. Die mehreren, elektrisch sequenziell hintereinander geschalteten Teil-Lichtbögen führen insgesamt zu einer höheren Bogenspannung, was in der Folge zu einem schnelleren Erlöschen des Lichtbogens führt.

Mit der Entstehung des Lichtbogens wird das den Schaltkontakt umgebende Gas stark erhitzt und dadurch ionisiert - er bilden sich sogenannte Schaltgase. Aufgrund der hohen Temperatur steigt der Druck im Inneren des Isolierstoffgehäuses stark an, wodurch die Schaltgase aus dem Gehäuse herausgedrückt werden. Bei dem in Figur 1 dargestellten Niederspannungs-Schutzschaltgerät 1 erfolgt dies durch eine oder mehrere unterhalb der Lichtbogen-Löschkammer 15 im Bereich der Befestigungsseite 4 im Isolierstoffgehäuse 2 ausgebildete Ausblasöffnungen 9. Mit Hilfe eines Pfeil 19 ist die Strömungsrichtung bzw. der Strömungsverlauf der Schaltgase nach Öffnung des bestromten Schaltkontakts 20 angedeutet.

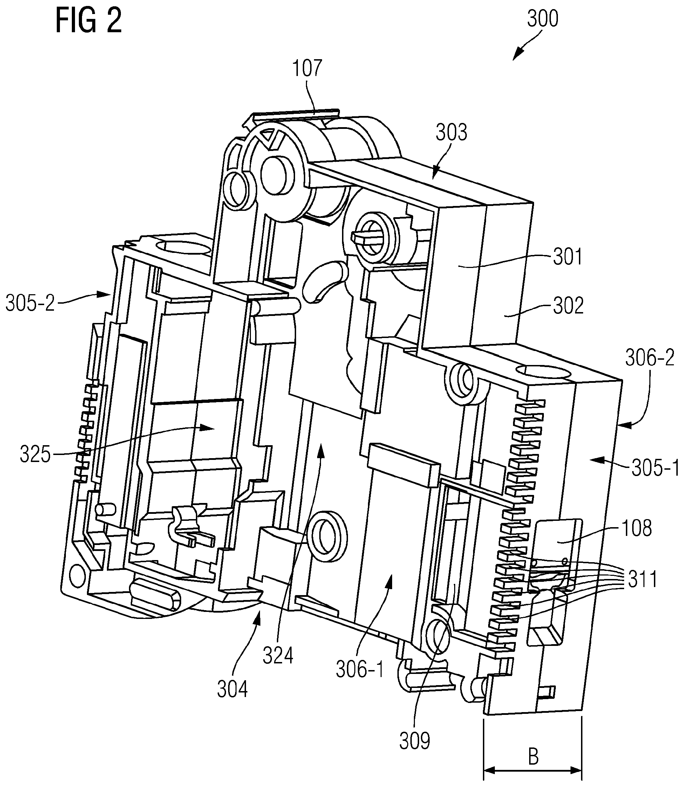

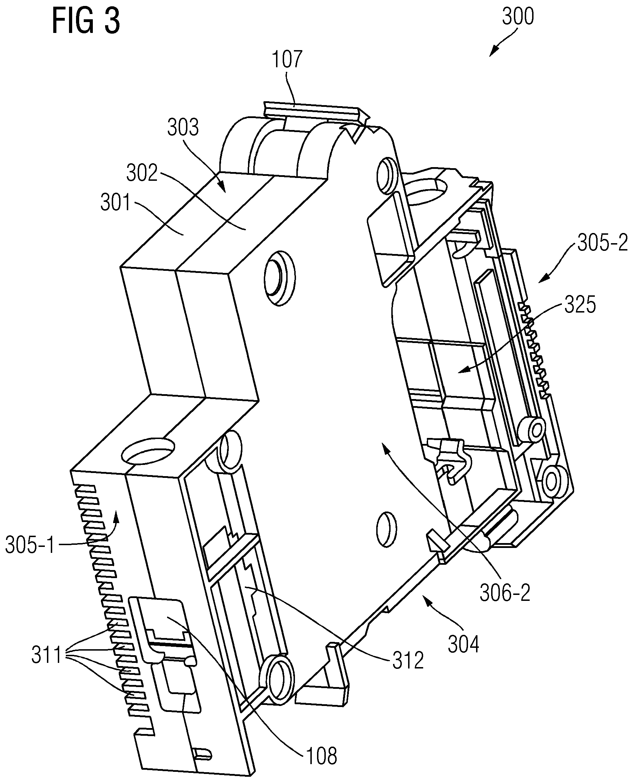

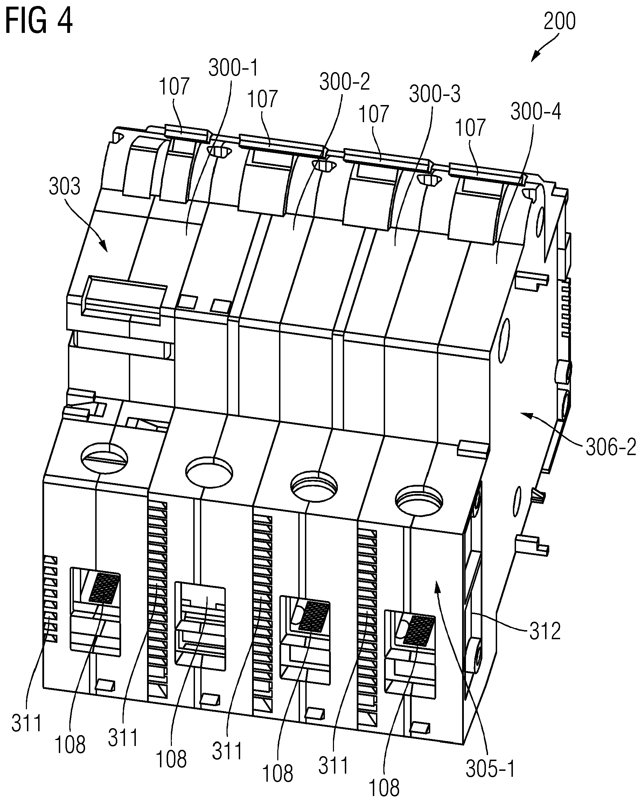

In den Figuren 2 und 3 ist ein erfindungsgemäßes Gehäusemodul 300 für ein aus mehreren derartiger Gehäusemodule gebildetes Isolierstoffgehäuse 200 (siehe Fig.4ff.) eines modularen, mehrpoligen Niederspannungs-Schutzschaltgerätes 100 (siehe Figur 4ff.) in verschiedenen Ansichten schematisch dargestellt. Das Gehäusemodul 300 weist eine Frontseite 303, eine der Frontseite 303 gegenüberüberliegende Befestigungsseite 304, sowie die Frontseite 303 und die Befestigungsseite 304 verbindende erste und zweite Schmal- und Breitseiten 305 und 306, genauer: eine erste Schmalseite 305-1, eine zweite Schmalseite 305-2, eine erste Breitseite 306-1 sowie eine zweite Breitseite 306-2 auf. Über die Befestigungsseite 304 ist das Gehäusemodul 300 an einer Trag- oder Hutschiene (nicht dargestellt) befestigbar.

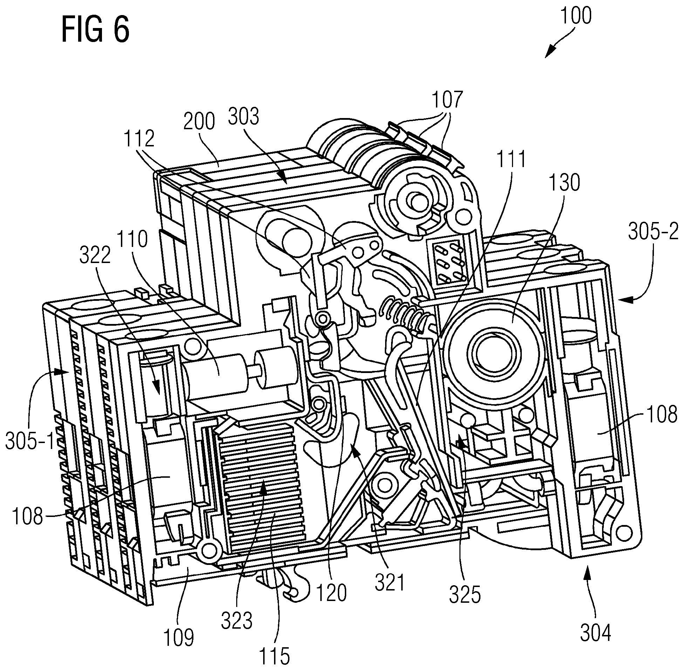

Das Gehäusemodul 300 ist zweischalig aufgebaut und weist eine erste Gehäusehalbschale 301 sowie eine zweite Gehäusehalbschale 302 auf, welche unter Ausbildung einer umlaufenden Fügelinie in Breitenrichtung B, d.h. in Richtung eines Normalenvektors der Breitseiten 306, montiert sind. Zwischen den beiden Gehäusehalbschalen 301 und 302 sind mehrere Aufnahmeräume zur Aufnahme unterschiedlicher Komponenten des Niederspannungs-Schutzschaltgerätes 100 ausgebildet. Weiterhin ist im Bereich der Frontseite 303 zwischen den beiden Gehäusehalbschalen 301 und 302 ein Betätigungselement 107 des Niederspannungs-Schutzschaltgerätes 100 drehbar gelagert angeordnet, mit dessen Hilfe ein in einem ersten Aufnahmeraum 321 des Gehäusemoduls 300 anordenbarer Schaltkontakt 120 des Niederspannungs-Schutzschaltgerätes 100 (siehe Fig.6) manuell betätigt, d.h. geöffnet und geschlossen werden kann.

Ein zweiter Aufnahmeraum 322 (siehe Fig.6) ist im Bereich der ersten Schmalseite 305-1 zwischen den beiden Gehäusehalbschalen 301 und 302 angeordnet und dient dazu, ein elektrisches Anschlusselement 108 des Niederspannungs-Schutzschaltgerätes 100 darin aufzunehmen und zu haltern. Ein weiterer zweiter Aufnahmeraum 322 ist im Bereich der zweiten Schmalseite 305-2 zwischen den beiden Gehäusehalbschalen 301 und 302 angeordnet und dient dazu, ein weiteres elektrisches Anschlusselement des Niederspannungs-Schutzschaltgerätes 100 darin aufzunehmen und zu haltern.

In dem durch die beiden Gehäusehalbschalen 301 und 302 gebildeten Gehäusemodul 300 ist zwischen dem ersten Aufnahmeraum zur Aufnahme des Schaltkontakts und dem zweiten Aufnahmeraum zur Aufnahme des elektrischen Anschlusselements ein dritter Aufnahmeraum 323 angeordnet, welcher dazu vorgesehen und ausgebildet ist, eine Lichtbogen-Löschvorrichtung 115 (siehe Fig.6) des Niederspannungs-Schutzschaltgerätes 100 aufzunehmen und zu haltern. Die Lichtbogen-Löschvorrichtung 115 dient dazu, einen beim Öffnen des bestromten Schaltkontakts 120 auftretenden Lichtbogen aufzunehmen, zu kühlen und zum Erlöschen zu bringen.

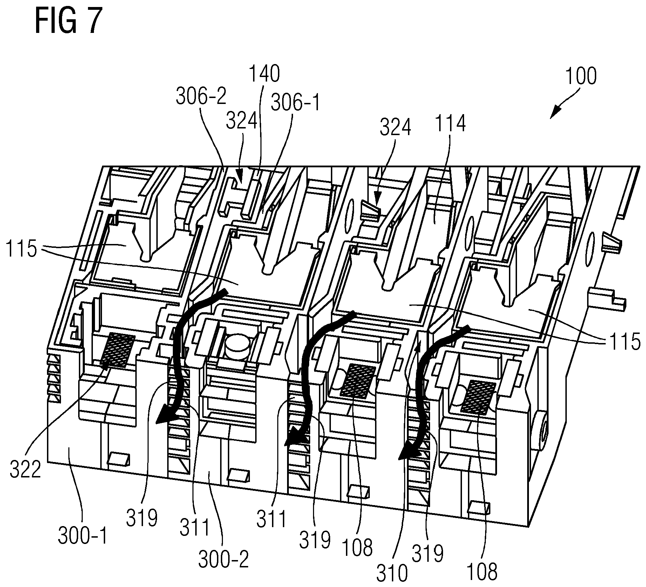

Im Bereich der ersten Breitseite 306-1 ist eine Ausströmöffnung 309 ausgebildet, welche ins Innere des Gehäusemoduls 300 - genauer: in ein dem zweiten Aufnahmeraum zugewandten Ende des dritten Aufnahmeraums - einmündet und dazu dient, beim Auftreten des Lichtbogens entstehende Schaltgase am hinteren Ende der im dritten Aufnahmeraum angeordneten Lichtbogen-Löschvorrichtung seitlich aus dem Gehäusemodul 300 ausströmen zu lassen. Im Zusammenwirken mit einem weiteren, baugleichen Gehäusemodul 300, dessen zweite Breitseite 306-2 unmittelbar an die erste Breitseite 306-1 des Gehäusemoduls 300 angrenzt, wird ein Ausblaskanal 310 (siehe Fig.7) gebildet, um die seitlich aus dem Gehäusemodul 300 entweichenden Schaltgase an dem im zweiten Aufnahmeraum angeordneten elektrischen Anschlusselement 108 vorbei in Richtung der ersten Schmalseite 305-1 zu leiten und dort durch zumindest eine in der ersten Schmalseite 305-1 ausgebildete zweite Öffnung 311 aus dem Gehäusemodul 300 herauszuführen. Die zweite Breitseite 306-2 des weiteren Gehäusemoduls 300 weist hierzu eine Vertiefung 312 auf, welche hinsichtlich ihrer Lage mit der Position der in der ersten Breitseite 306-1 des Gehäusemoduls 300 ausgebildeten Ausströmöffnung 309 korrespondiert, um auf diese Weise den Ausblaskanal 310 zu bilden. Die Gestaltung des Ausblaskanals 310 zur Führung der Schaltgase erfolgt somit nicht innerhalb eines einzelnen Gehäusemoduls 300, sondern durch das Zusammenwirken zweier zueinander benachbart angeordneter Gehäusemodule 300. Auf diese Weise entsteht zwischen der ersten Breitseite 306-1 des ersten Gehäusemoduls 300 und der zweiten Breitseite 306-2 des weiteren Gehäusemoduls 300 ein isolierter Ausblaskanal 310, welcher die Schaltgase an der ersten Schmalseite 305-1 aus dem Gehäusemodul 300 herausführt.

Indem die Mitte der ersten Breitseite 306-1 etwas nach innen eingezogen ist, ist ein vierter Aufnahmeraum 324 (siehe Fig.7) gebildet, welcher beispielsweise zu Aufnahme einer Flachbaugruppe genutzt werden kann. Der vierte Aufnahmeraum 324 ist dabei in einer Breitenrichtung B betrachtet durch die erste Breitseite 306-1 des Gehäusemoduls 300 sowie - in der Gegenrichtung - durch die zweite Breitseite 306-2 des benachbart angeordneten Gehäusemoduls 300 begrenzt.

Ferner weist das Gehäusemodul 300 einen fünften Aufnahmeraum 325 auf, welcher als Gehäusedurchbruch zwischen dem im Bereich der zweiten Schmalseite 305-2 angeordneten weiteren zweiten Aufnahmeraum zur Aufnahme des weiteren elektrischen Anschlusselements und dem ersten Aufnahmeraum zur Aufnahme des Schaltkontakts 120 ausgebildet ist und sich von der ersten Breitseite 306-1 bis zur zweiten Breitseite 306-2 erstreckt. Werden zur Bildung eines mehrpoligen Isolierstoffgehäuses 200 für ein mehrpoliges, modulares Niederspannungs-Schutzschaltgerät 100 mehrere Gehäusemodule 300 nebeneinander, d.h. Breitseite an Breitseite, angeordnet und aneinander befestigt, so entsteht aus den mehreren nebeneinander angeordneten fünften Aufnahmeräumen 325 ein gemeinsamer, modulübergreifender Aufnahmeraum, welcher groß genug dimensioniert sowie dazu vorgesehen und ausgebildet ist, einen Summenstromwandler 130 (siehe Fig.6) für einen mehrpoligen Fehlerstromschutzschalter darin aufzunehmen und zu haltern. Je nach Anzahl der das mehrpolige Isolierstoffgehäuse 200 bildenden Gehäusemodule 300 entsteht dabei ein 2-poliger, 3-poliger oder 4-poliger Fehlerstromschutzschalter mit einem entsprechend dimensionierten 2-poligen, 3-poligen oder 4-poligen Summenstromwandler.

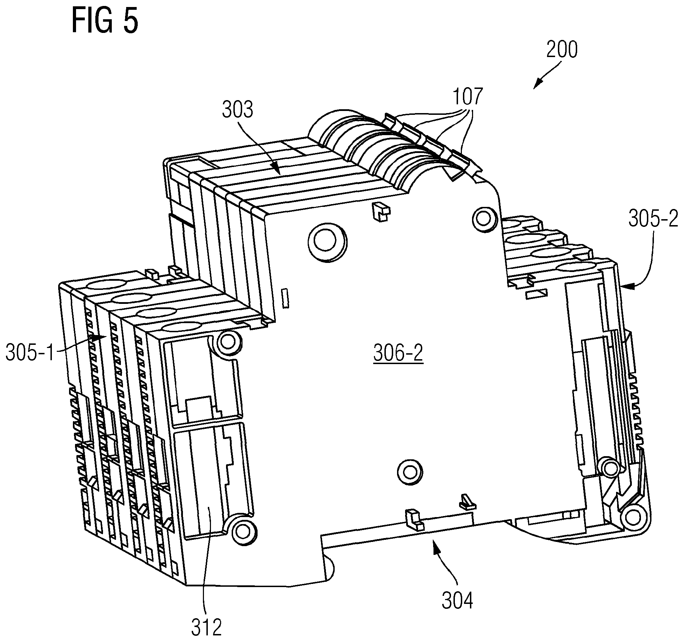

In den Figuren 4 und 5 ist ein erfindungsgemäßes modulares Isolierstoffgehäuse 200 für ein modular aufgebautes, mehrpoliges Niederspannungs-Schutzschaltgerät 100 (siehe Fig.6) in verschiedenen Ansichten schematisch dargestellt. Dabei handelt es sich um ein 4-poliges Isolierstoffgehäuse 200, welches aus einem ersten Gehäusemodul 300-1, einem in Breitenrichtung B daneben angeordneten zweites Gehäusemodul 300-2, einem in Breitenrichtung B neben diesem angeordneten dritten Gehäusemodul 300-3 sowie einem neben dem dritten Gehäusemodul 300-3 angeordneten vierten Gehäusemodul 300-4 besteht. Die Gehäusemodule 300-1, 300-2, 300-3 und 300-4 sind allesamt aneinander befestigt, beispielsweise durch Nieten, Klammern, Rastverbindungen oder dergleichen.

Das modulare, aus den vier Gehäusemodulen 300-1, 300-2, 300-3 und 300-4 gebildete 4-poliges Isolierstoffgehäuse 200 ist für einen 4-poligen Fehlerstromschutzschalter (FI/LS oder RCBO) vorgesehen. Über die elektrischen Anschlusselemente 108 der drei Gehäusemodule 300-2, 300-3 und 300-4 sind dabei drei Phasenleiter (nicht dargestellt) anschließbar, während über das elektrische Anschlusselement 108 des ersten Gehäusemoduls 300-1 ein Neutralleiter anschließbar ist. Es wäre jedoch ebenso möglich, aus mehreren gleichartigen Gehäusemodulen 300 ein Isolierstoffgehäuse für einen mehrpoligen Leitungsschutzschalter zu bilden.

Analog zur Nomenklatur des in den Figuren 2 und 3 beschriebenen, einzelnen Gehäusemodules 300 weist auch das aus mehreren derartiger Gehäusemodule gebildete Isolierstoffgehäuse 200 eine Frontseite 303, eine der Frontseite 303 gegenüberliegende Befestigungsseite 304 sowie die Front- und die Befestigungsseite 303, 304 verbindende erste und zweite Schmalseiten 305-1 und 305-2 sowie erste und zweite Breitseiten 306-1 und 306-2 auf.

Zwischen dem ersten Gehäusemodul 300-1 und dem zweiten Gehäusemodul 300-2 befindet sich im Bereich der ersten Schmalseite 305-1 eine Reihe zweiter Öffnungen 311, welche zu dem zwischen der ersten Breitseite 306-1 des zweiten Gehäusemoduls 300-2 und der zweiten Breitseite 306-2 des ersten Gehäusemoduls 300-1 gebildeten Ausblaskanal 310 gehören, welcher die in der ersten Breitseite 306-1 des zweiten Gehäusemoduls 300-2 angeordnete Ausströmöffnung 309 (siehe Fig.2) mit den an der ersten Schmalseite 305-1 angeordneten zweiten Öffnungen 311 verbindet, um die beim Öffnen des im zweiten Gehäusemodul 300-2 angeordneten Schaltkontakts 108 auftretenden Schaltgase an der ersten Schmalseite 305-1 aus dem Isolierstoffgehäuse 200 herauszuführen und in die Umgebung entweichen zu lassen. Ebenso sind zwischen dem zweiten Gehäusemodul 300-2 und dem dritten Gehäusemodul 300-3 sowie zwischen dem dritten Gehäusemodul 300-3 und dem vierten Gehäusemodul 300-4 jeweils eine Reihe zweiter Öffnungen 311 im Bereich der ersten Schmalseite 305-1 ausgebildet, welche zu weiteren Ausblaskanälen gehören, die zwischen dem zweiten und dem dritten Gehäusemodul bzw. zwischen dem dritten und dem vierten Gehäusemodul ausgebildet sind und dazu dienen, Schaltgase aus dem dritten bzw. aus dem vierten Gehäusemodul 300-3, 300-4 in die Umgebung entweichen zu lassen.

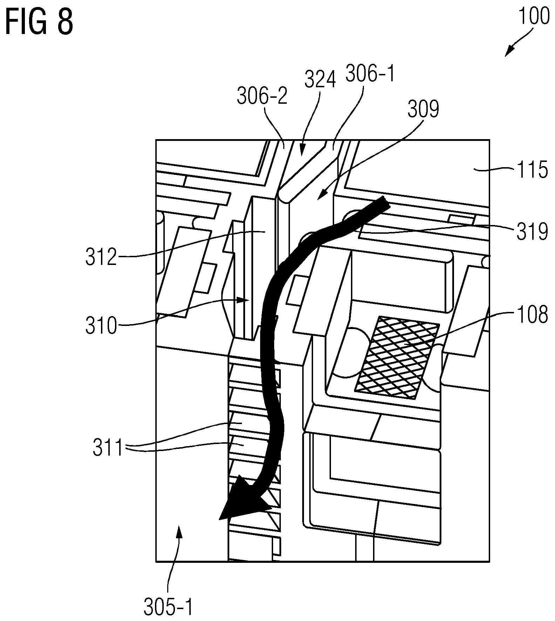

In den Figuren 6 bis 8 ist ein erfindungsgemäßes, modulares, ehrpoliges Niederspannungs-Schutzschaltgerät 100 mit einem modularen Isolierstoffgehäuse 200 in verschiedenen Ansichten schematisch dargestellt. Um den inneren Aufbau des Niederspannungs-Schutzschaltgerätes 100 zu verdeutlichen zeigen die Figuren 6 und 7 jeweils eine Schnittdarstellung des erfindungsgemäßen, modularen, mehrpoligen Niederspannungs-Schutzschaltgerätes 100. Figur 6 zeigt dabei eine parallel zu den Breitseiten 306-1, 306-2 ausgeführte Schnittdarstellung durch das dritte Gehäusemodul 300-3, während in Figur 7 der Schnitt parallel zur Frontseite 303 bzw. zur Befestigungsseite 304 ausgeführt ist, wodurch einen Blick ins Innere des gesamten, modular aufgebauten, mehrpoligen Niederspannungs-Schutzschaltgerätes 100 ermöglicht wird. In Figur 8 ist eine Detaildarstellung eines der in Figur 7 skizzierten Ausblaskanäle 310 schematisch dargestellt.

Das modulare Isolierstoffgehäuse 200 entspricht dabei dem in den Figuren 4 und 5 dargestellten und vorstehend beschriebenen Isolierstoffgehäuse 200, d.h. bei dem dargestellten Niederspannungs-Schutzschaltgerät 100 handelt es sich um einen 4-poligen Fehlerstromschutzschalter, dessen Isolierstoffgehäuse 200 aus einem ersten Gehäusemodul 300-1, in dem vor allem Komponenten zur Fehlerstromerfassung angeordnet sind, sowie drei Breitenrichtung B daneben angeordneten weiteren Gehäusemodulen besteht: dem zweite Gehäusemodul 300-2, dem dritten Gehäusemodul 300-3 sowie dem vierten Gehäusemodul 300-4, in denen vor allem Komponenten eines Leitungsschutzschalters, d.h. zur Erfassung eines Kurzschlusses oder einer elektrischen Überlast, angeordnet sind.

Im ersten Aufnahmeraum 321 ist der elektrische Schaltkontakt 120 angeordnet, d.h. aufgenommen und gehaltert, welcher bei Auftreten eines Kurzschlusses oder einer elektrischen Überlast geöffnet werden kann, um dadurch den Stromfluss über Schaltkontakt 120 zu unterbrechen. Zur Unterbrechung im Falle eines Kurzschlusses weist das Niederspannungs-Schutzschaltgerät 100 eine Kurzschluss-Auslöseeinrichtung 110 auf, welche mit einer Schaltmechanik 112 gekoppelt ist und bei Auftreten eines Kurzschlusses über die Schaltmechanik 112 ein Öffnen des Schaltkontakts 120 bewirkt. Weiterhin weist das Niederspannungs-Schutzschaltgerät 100 eine Überlast-Auslöseeinrichtung 111 auf, welche ebenfalls mit der Schaltmechanik 112 gekoppelt ist und bei Auftreten einer elektrischen Überlast über die Schaltmechanik 112 ein Öffnen des Schaltkontakts 120 veranlasst.

In den beiden, im Bereich jeweils einer der beiden Schmalseiten 305-1 bzw. 305-2 ausgebildeten, zweiten Aufnahmeräumen 322 ist jeweils ein elektrisches Anschlusselement 108 angeordnet, d.h. aufgenommen und gehaltert, um das Niederspannungs-Schutzschaltgerät 100 mit elektrischen Außenleitern eines Phasenstromkreises kontaktieren zu können.

Die Lichtbogen-Löschvorrichtung 115 ist im dritten Aufnahmeraum 323 aufgenommen und gehaltert und dient dazu, einen beim Öffnen des bestromten Schaltkontakts 120 auftretenden Lichtbogen aufzunehmen, zu kühlen und zum Erlöschen zu bringen. Hierzu weist die Lichtbogen-Löschvorrichtung 115 eine Vielzahl von Löschblechen auf, welche parallel zueinander sowie voneinander beabstandet angeordnet sind, um den Lichtbogen bei seinem Auftreffen in mehrere Teillichtbögen aufzuteilen. Um den Lichtbogen in Richtung der Lichtbogen-Löschvorrichtung 115 zu führen weist das Niederspannungs-Schutzschaltgerät 100 eine Lichtbogen-Leitschiene 114 auf, welche vorwiegend im ersten Aufnahmeraum 321 angeordnet ist und zum unteren Ende der Lichtbogen-Löschvorrichtung 115 führt.

Weiterhin ist in der Darstellung der Figur 6 der fünfte Aufnahmeraum 325 mit dem darin angeordneten Summenstromwandler 130 gut zu erkennen. Der fünfte Aufnahmeraum 325 ist dabei unmittelbar neben dem im Bereich der zweiten Schmalseite 305-2 angeordneten, weiteren zweiten Aufnahmeraum 322 mit dem darin angeordneten elektrischen Anschlusselement 308 in dem Isolierstoffgehäuse 200 ausgebildet.

Indem die Schaltgase an der ersten Schmalseite 305-1 und nicht an der Befestigungsseite 304 aus dem Gehäusemodul 300 bzw. dem Isolierstoffgehäuse 200 herausgeführt werden, kann der Bauraum im Bereich der Breitseite 304 zur Anordnung weiterer Komponenten des Niederspannungs-Schutzschaltgerätes 100 genutzt werden. In Figur 6 ist daher unterhalb der Lichtbogen-Löschvorrichtung 115 sowie des im Bereich der ersten Schmalseite 305-1 angeordneten elektrischen Anschlusselements 108 eine Flachbaugruppe 109 dargestellt, welche diesen freigewordenen Bauraum nutzt. Die Flachbaugruppe 109 kann dabei als modulübergreifende Baugruppe ausgebildet sein, d.h. sie erstreckt sich über mehr als ein Gehäusemodul 300. Beispielsweise kann über diese Flachbaugruppe 109 eine gemeinsame, modulübergreifende Stromversorgung für weitere, in den einzelnen Gehäusemodulen 300 angeordnete Funktionsbaugruppen realisiert werden.

Anhand des in Figur 7 dargestellten Schnittes, welcher das Niederspannungs-Schutzschaltgerät 100 über seine ganze Breite zeigt, ist der Ausblaskanal 310, welcher von einem rückwärtigen Ende der im dritten Aufnahmeraum 323 angeordneten Lichtbogen-Löschvorrichtung 115 an dem elektrischen Anschlusselement 308 vorbei zu den an der ersten Schmalseite 305-1 angeordneten zweiten Öffnungen 311 führt, dargestellt. Durch einen Pfeil 319 ist wiederum die Strömungsrichtung bzw. der Strömungsverlauf der Schaltgase zwischen den Breitseiten 306-1, 306-2 zweier benachbarter Gehäusemodule 300 nach Öffnung des bestromten Schaltkontakts 120 schematisch angedeutet.

Ferner ist anhand von Figur 7 zu erkennen, wie zwischen der zweiten Breitseite 306-2 des ersten Gehäusemoduls 300-1 und der etwas nach innen gezogenen ersten Breitseite 306-1 des zweiten Gehäusemoduls 300-2 der vierter Aufnahmeraum 324 gebildet ist, in dem eine Flachbaugruppe 140 des Niederspannungs-Schutzschaltgerätes 100 angeordnet, d.h. aufgenommen und gehaltert ist. Mit Hilfe der Flachbaugruppe 140 sind weitere Funktionalitäten des Niederspannungs-Schutzschaltgerätes 100, beispielsweise eine Kommunikationsfunktion, realisierbar.

Figur 8 zeigt schematisch eine Detaildarstellung eines der in Figur 7 skizzierten Ausblaskanäle 310. Hierbei ist gut zu erkennen, wie die im hinteren Bereich des zweiten Aufnahmeraums 322, in dem die Lichtbogen-Löschvorrichtung 115 angeordnet ist, in der ersten Breitseite 306-1 ausgebildete Ausströmöffnung 309 in den Ausblaskanal 310 mündet, welcher durch die erste Breitseite 306-1 sowie die in der zweiten Breitseite 306-2 gebildete Vertiefung 312 gebildet ist. Durch den Ausblaskanal 310 werden die bei der Lichtbogenentstehung auftretenden Schaltgase über die in der ersten Schmalseite 305-1 ausgebildeten zweiten Öffnungen 311 aus dem Isolierstoffgehäuse 200 herausgeführt, schematisch dargestellt durch den Pfeil 319.

### Bezugszeichenliste

- 1: Niederspannungs-Schutzschaltgerät
- 2: Isolierstoffgehäuse
- 3: Frontseite
- 4: Befestigungsseite
- 5: Schmalseite
- 6: Breitseite
- 7: Betätigungselement
- 8: Anschlussklemme
- 9: Ausblasöffnung
- 10: Kurzschluss-Auslöseeinrichtung
- 11: Magnetspule
- 12: Magnetjoch
- 14: Lichtbogen-Leitschiene
- 15: Lichtbogen-Löschkammer
- 16: Thermobimetallelement
- 19: Pfeil
- 20: Schaltkontakt
- 21: Festkontaktstück
- 22: Bewegkontaktstück
- 23: Festkontaktträger
- 24: Bewegkontaktträger

- 100: Niederspannungs-Schutzschaltgerät
- 107: Betätigungselement
- 108: elektrisches Anschlusselement
- 109: Flachbaugruppe
- 110: Kurzschluss-Auslöseeinrichtung
- 111: Überlast-Auslöseeinrichtung
- 112: Schaltmechanik
- 114: Lichtbogen-Leitschiene 114
- 115: Lichtbogen-Löschvorrichtung
- 120: Schaltkontakt
- 130: Summenstromwandler
- 140: Flachbaugruppe
- 200: Isolierstoffgehäuse
- 300: Gehäusemodul
300-1 erstes Gehäusemodul
300-2 zweites Gehäusemodul
300-3 drittes Gehäusemodul
300-4 viertes Gehäusemodul
- 301: erste Gehäusehalbschale
- 302: zweite Gehäusehalbschale
- 303: Frontseite
- 304: Befestigungsseite
- 305: Schmalseite
305-1 erste Schmalseite
305-2 zweite Schmalseite
- 306: Breitseite
306-1 erste Breitseite
306-2 zweite Breitseite
- 309: Ausströmöffnung
- 310: Ausblaskanal
- 311: zweite Öffnung
- 312: Vertiefung
- 319: Pfeil
- 321: erster Aufnahmeraum
- 322: zweiter Aufnahmeraum
- 323: dritter Aufnahmeraum
- 324: vierter Aufnahmeraum
- 325: fünfter Aufnahmeraum

## Patentansprüche

1. Gehäusemodul (300) für ein aus mehreren Gehäusemodulen (300) gebildetes Isolierstoffgehäuse (200) eines modularen, mehrpoligen Niederspannungs-Schutzschaltgerätes (100), aufweisend eine Frontseite (303), eine der Frontseite (303) gegenüberliegende Befestigungsseite (304) sowie die Front- und die Befestigungsseite (303, 304) verbindende erste und zweite Schmal- und Breitseiten (305-1, 305-2, 306-1, 306-2),
wobei die erste Breitseite (306-1) eine Ausströmöffnung (309) aufweist, durch die bei Öffnung eines Schaltkontakts (120) des Niederspannungs-Schutzschaltgerätes (100) auftretende Schaltgase seitlich aus dem Gehäusemodul (300) ausströmen können,
wobei die zweite Breitseite (306-2) im Bereich der ersten Schmalseite (305-1) eine Vertiefung (312) aufweist, die sich bis zur ersten Schmalseite (305-1) hin erstreckt und in die die Ausströmöffnung (309) eines benachbart angeordneten Gehäusemoduls (300) einmündet, wodurch ein Ausblaskanal (310) gebildet ist, um bei Öffnung des Schaltkontakts (120) auftretende Schaltgase an der ersten Schmalseite (305-1) über zumindest eine zweite Öffnung (311) aus dem Gehäusemodul (300) herauszuführen.

2. Gehäusemodul (300) nach Anspruch 1, mit
- einem ersten Aufnahmeraum, welcher dazu vorgesehen und ausgebildet ist, einen Schaltkontakt (12) des Niederspannungs-Schutzschaltgerätes (100) aufzunehmen und zu haltern,
- einem zweiten Aufnahmeraum, welcher dazu vorgesehen und ausgebildet ist, im Bereich der ersten Schmalseite (305-1) ein elektrisches Anschlusselement (108) des Niederspannungs-Schutzschaltgerätes (100) aufzunehmen und zu haltern,
wobei die beim Öffnen des Schaltkontakts (120) auftretenden Schaltgase an den elektrischen Anschlusselement (108) vorbei zur ersten Schmalseite (305-1) geführt sind.

3. Gehäusemodul (300) nach Anspruch 1, aufweisend einen zwischen dem ersten und dem zweiten Aufnahmeraum angeordneten dritten Aufnahmeraum, welcher dazu vorgesehen und ausgebildet ist, eine Lichtbogen-Löschvorrichtung (115) des Niederspannungs-Schutzschaltgerätes (100) aufzunehmen und zu haltern, wobei die Ausströmöffnung (109) in den dritten Aufnahmeraum einmündet.

4. Gehäusemodul (300) nach einem der vorherigen Ansprüche, aufweisend einen vierten Aufnahmeraum (324) zu Aufnahme einer Flachbaugruppe, wobei der vierte Aufnahmeraum (324) in einer Breitenrichtung (B) durch die erste Breitseite (306-1) des Gehäusemoduls (300) sowie in der Gegenrichtung (-B) durch die zweite Breitseite (306-2 des benachbart angeordneten Gehäusemoduls (300) begrenzt ist.

5. Gehäusemodul (300) nach einem der vorherigen Ansprüche, wobei das Gehäusemodul (300) dazu vorgesehen und ausgebildet ist, Komponenten eines Leitungsschutzschalters oder Fehlerstromschutzschalters und/oder eines Brandschutzschalters aufzunehmen und zu haltern.

6. Modulares Isolierstoffgehäuse (200) für ein modular aufgebautes, mehrpoliges Niederspannungs-Schutzschaltgerät (100), aufweisend eine Frontseite (303), eine der Frontseite (303) gegenüberliegende Befestigungsseite (304) sowie die Front- und die Befestigungsseite (303, 304) verbindende Schmal- und Breitseiten (305-1, 305-2, 306-1, 306-2),
- wobei das Isolierstoffgehäuse (200) aus einem ersten Gehäusemodul (300-1) nach einem der Ansprüche 1 bis 5 und zumindest einem weiteren, in einer Breitenrichtung (B) daneben angeordneten und daran befestigten zweiten Gehäusemodul (300-2) nach einem der Ansprüche 1 bis 5 gebildet ist,
- wobei das zweite Gehäusemodul (300-2) dazu vorgesehen und ausgebildet ist, einen Schaltkontakt (108) aufzunehmen und zu haltern, und
- wobei zwischen dem ersten Gehäusemodul (300-1) und dem zweiten Gehäusemodul (300-2) ein Ausblaskanal (310) ausgebildet ist, um bei der Öffnung des Schaltkontakts (108) auftretende Schaltgase an der ersten Schmalseite (305-1) aus dem Isolierstoffgehäuse (200) herauszuführen.

7. Modulares Isolierstoffgehäuse (200) nach Anspruch 6, aufweisend zumindest ein weiteres, nach einem der Ansprüche 1 bis 5 gebildetes drittes Gehäusemodul (300-3), welches in der Breitenrichtung (B) neben dem zweiten Gehäusemodul (300-2) angeordnet ist,
wobei das dritte Gehäusemodul (300-3) dazu vorgesehen und ausgebildet ist, einen Schaltkontakt (108) aufzunehmen und zu haltern,
wobei zwischen dem zweiten Gehäusemodul (300-2) und dem dritten Gehäusemodul (300-3) ein weiterer Ausblaskanal (310) ausgebildet ist, um bei der Öffnung des Schaltkontakts (108) auftretende Schaltgase an der ersten Schmalseite (305-1) aus dem Isolierstoffgehäuse (200) herauszuführen.

8. Modulares Isolierstoffgehäuse (200) nach einem der Ansprüche 6 oder 7, aufweisend einen Deckel, welcher die erste Breitseite (306-1) des ersten Gehäusemoduls (300-1) zumindest teilweise abdeckt.

9. Modulares mehrpoliges Niederspannungs-Schutzschaltgerät (100), mit einem aus mehreren Gehäusemodulen (300-1, 300-2, 300-3, 300-4) nach einem der Ansprüche 1 bis 5 gebildeten Isolierstoffgehäuse (200) nach einem der Ansprüche 6 bis 8.

10. Modulares mehrpoliges Niederspannungs-Schutzschaltgerät (100) nach Anspruch 9, wobei das Schutzschaltgerät (100) als zwei-, drei- oder vier-poliger Leitungsschutzschalter ausgebildet ist und entsprechend zwei, drei oder vier identische Gehäusemodule (300-1, 300-2, 300-3, 300-4) aufweist, welche Breitseite an Breitseite nebeneinander angeordnet sowie aneinander befestigt sind, wobei zwischen zwei benachbarten Gehäusemodulen (300-1, 300-2, 300-3, 300-4) jeweils ein Ausblaskanal (310) gebildet ist.

11. Modulares mehrpoliges Niederspannungs-Schutzschaltgerät (100) nach Anspruch 9, wobei das Schutzschaltgerät (100) als zwei-, drei- oder vier-poliger Fehlerstromschutzschalter ausgebildet ist und
- ein erstes Gehäusemodul (300-1) aufweist, in dem Komponenten zur Erfassung und Auslösung bei Auftreten eines Fehlerstroms aufgenommen und gehaltert sind, sowie
- ein bis drei weitere Gehäusemodule (300-2, 300-3, 300-4) aufweist, in denen Komponenten zur Erfassung und Auslösung bei Auftreten eines Kurzschlusses oder einer elektrischen Überlast aufgenommen und gehaltert sind,
wobei das erste Gehäusemodul (300-1) sowie die ein bis drei weiteren Gehäusemodule (300-2, 300-3, 300-4) Breitseite an Breitseite nebeneinander angeordnet sowie aneinander befestigt sind, wobei zwischen zwei benachbarten Gehäusemodulen (300-1, 300-2, 300-3, 300-4) jeweils ein Ausblaskanal (310) gebildet ist.

12. Modulares mehrpoliges Niederspannungs-Schutzschaltgerät (100) nach Anspruch 11, wobei ein Summenstromwandler (130) des mehrpoligen Fehlerstromschutzschalters in einem Gehäusemodul-übergreifenden fünften Aufnahmeraum (325) angeordnet ist.

13. Modulares mehrpoliges Niederspannungs-Schutzschaltgerät (100) nach einem der Ansprüche 9 bis 12, wobei im vierten Aufnahmeraum (324) zumindest eines der Gehäusemodule (300-1, 300-2, 300-3, 300-4) eine Flachbaugruppe (140) angeordnet ist.

14. Modulares mehrpoliges Niederspannungs-Schutzschaltgerät (100) nach einem der Ansprüche 9 bis 12, wobei die nach außen weisende erste Breitseite (306-1) des ersten Gehäusemoduls (300-1) zumindest teilweise durch einen Deckel abdeckt ist.

## Claims

1. Housing module (300) for an insulating-material housing (200), formed from a plurality of housing modules (300), of a modular multi-pole low-voltage protective switching device (100), having a front side (303), a fastening side (304) on the opposite side from the front side (303), and first and second narrow and broad sides (305-1, 305-2, 306-1, 306-2) connecting the front side (303) and the fastening side (304),
wherein the first broad side (306-1) has an outflow opening (309) through which switching gases that arise when a switching contact (120) of the low-voltage protective switching device (100) is opened can flow laterally out of the housing module (300),
wherein the second broad side (306-2) has, in the region of the first narrow side (305-1), a recess (312) into which the outflow opening (309) of an adjacently arranged housing module (300) leads and which extends as far as the first narrow side (305-1), with the result that an exhaust channel (310) is formed in order to guide switching gases that arise when the switching contact (120) is opened out of the housing module (300) at the first narrow side (305-1) via at least one second opening (311).

2. Housing module (300) according to Claim 1, having
- a first receiving space which is provided and designed to receive and to hold a switching contact (12) of the low-voltage protective switching device (100),
- a second receiving space which is provided and designed to receive and to hold, in the region of the first narrow side (305-1), an electrical connection element (108) of the low-voltage protective switching device (100),
wherein the switching gases that arise when the switching contact (120) is opened are guided past the electrical connection element (108) to the first narrow side (305-1).

3. Housing module (300) according to Claim 1, having a third receiving space which is arranged between the first and the second receiving space and which is provided and designed to receive and to hold an arc-quenching apparatus (115) of the low-voltage protective switching device (100), wherein the outflow opening (109) leads into the third receiving space.

4. Housing module (300) according to one of the preceding claims, having a fourth receiving space (324) for receiving a flat assembly, wherein the fourth receiving space (324) is bounded in a width direction (B) by the first broad side (306-1) of the housing module (300) and in the opposite direction (-B) by the second broad side (306-2) of the adjacently arranged housing module (300).

5. Housing module (300) according to one of the preceding claims, wherein the housing module (300) is provided and designed to receive and to hold components of a line circuit breaker or fault current circuit breaker and/or of an arc fault detection device.

6. Modular insulating-material housing (200) for a multi-pole low-voltage protective switching device (100) of modular design, having a front side (303), a fastening side (304) on the opposite side from the front side (303), and narrow and broad sides (305-1, 305-2, 306-1, 306-2) connecting the front side (303) and the fastening side (304),
- wherein the insulating-material housing (200) is formed from a first housing module (300-1) according to one of Claims 1 to 5 and at least one further, second housing module (300-2) according to one of Claims 1 to 5 that is arranged adjacent thereto in a width direction (B) and is fastened thereto,
- wherein the second housing module (300-2) is provided and designed to receive and to hold a switching contact (108), and
- wherein, between the first housing module (300-1) and the second housing module (300-2), an exhaust channel (310) is formed in order to guide switching gases that arise when the switching contact (108) is opened out of the insulating-material housing (200) at the first narrow side (305-1).

7. Modular insulating-material housing (200) according to Claim 6, having at least one further, third housing module (300-3) formed according to one of Claims 1 to 5, which is arranged next to the second housing module (300-2) in the width direction (B),
wherein the third housing module (300-3) is provided and designed to receive and to hold a switching contact (108),
wherein, between the second housing module (300-2) and the third housing module (300-3), a further exhaust channel (310) is formed in order to guide switching gases that arise when the switching contact (108) is opened out of the insulating-material housing (200) at the first narrow side (305-1).

8. Modular insulating-material housing (200) according to one of Claims 6 and 7, having a cover which at least partially covers the first broad side (306-1) of the first housing module (300-1).

9. Modular multi-pole low-voltage protective switching device (100) having an insulating-material housing (200) according to one of Claims 6 to 8 that is formed from a plurality of housing modules (300-1, 300-2, 300-3, 300-4) according to one of Claims 1 to 5.

10. Modular multi-pole low-voltage protective switching device (100) according to Claim 9, wherein the protective switching device (100) is in the form of a two-, three- or four-pole line circuit breaker and accordingly has two, three or four identical housing modules (300-1, 300-2, 300-3, 300-4) which are arranged next to one another broad side to broad side and are fastened to one another, wherein an exhaust channel (310) is formed in each case between two adjacent housing modules (300-1, 300-2, 300-3, 300-4) .

11. Modular multi-pole low-voltage protective switching device (100) according to Claim 9, wherein the protective switching device (100) is in the form of a two-, three- or four-pole fault current circuit breaker and
- has a first housing module (300-1) in which components for detecting and tripping if a fault current occurs are received and held, and
- has one to three further housing modules (300-2, 300-3, 300-4) in which components for detecting and tripping if a short circuit or an electrical overload occurs are received and held, wherein the first housing module (300-1) and the one to three further housing modules (300-2, 300-3, 300-4) are arranged next to one another broad side to broad side and are fastened to one another, wherein an exhaust channel (310) is formed in each case between two adjacent housing modules (300-1, 300-2, 300-3, 300-4).

12. Modular multi-pole low-voltage protective switching device (100) according to Claim 11, wherein a summation current transformer (130) of the multi-pole fault current circuit breaker is arranged in a fifth receiving space (325) spanning the housing modules.

13. Modular multi-pole low-voltage protective switching device (100) according to one of Claims 9 to 12, wherein a flat assembly (140) is arranged in the fourth receiving space (324) of at least one of the housing modules (300-1, 300-2, 300-3, 300-4).

14. Modular multi-pole low-voltage protective switching device (100) according to one of Claims 9 to 12, wherein the outwardly facing first broad side (306-1) of the first housing module (300-1) is at least partially covered by a cover.

## Revendications

1. Module de boîtier (300) pour un boîtier en matériau isolant (200), formé de plusieurs modules de boîtier (300), d'un disjoncteur basse tension modulaire multipolaire (100), présentant un côté avant (303), un côté de fixation (304) opposé au côté avant (303), et des premiers et deuxièmes côtés étroits et larges (305-1, 305-2, 306-1, 306-2) reliant le côté avant et le côté de fixation (303, 304),
dans lequel le premier côté large (306-1) présente un orifice d'écoulement (309) à travers lequel des gaz de commutation apparaissant lors de l'ouverture d'un contact de commutation (120) du disjoncteur basse tension (100) peuvent s'écouler de manière latérale hors du module de boîtier (300),
dans lequel le deuxième côté large (306-2) présente, dans la région du premier côté étroit (305-1), un renfoncement (312) qui s'étend jusqu'au premier côté étroit (305-1) et qui débouche dans l'orifice d'écoulement (309) d'un module de boîtier (300) adjacent, grâce à quoi un canal d'échappement (310) est formé afin de guider hors du module de boîtier (300), au niveau du premier côté étroit (305-1) et en passant par le au moins un deuxième orifice (311), des gaz de commutation apparaissant lors de l'ouverture du contact de commutation (120).

2. Module de boîtier (300) selon la revendication 1, comprenant :
- un premier espace de réception qui est prévu et conçu afin de recevoir et de retenir un contact de commutation (12) du disjoncteur basse tension (100),
- un deuxième espace de réception qui est prévu et conçu afin de recevoir et de retenir un élément de connexion électrique (108) du disjoncteur basse tension (100) dans la région du premier côté étroit (305-1),
dans lequel les gaz de commutation apparaissant lors de l'ouverture du contact de commutation (120) sont guidés au-delà de l'élément de connexion électrique (108) vers le premier côté étroit (305-1).

3. Module de boîtier (300) selon la revendication 1, présentant un troisième espace de réception, agencé entre le premier et le deuxième espace de réception, qui est prévu et conçu afin de recevoir et de retenir un dispositif d'extinction d'arc (115) du disjoncteur basse tension (100), dans lequel l'orifice d'écoulement (109) débouche dans le troisième espace de réception.

4. Module de boîtier (300) selon l'une quelconque des revendications précédentes, présentant un quatrième espace de réception (324) permettant de recevoir un constituant plat, dans lequel le quatrième espace de réception (324) est limité dans une direction de largeur (B) par le premier côté large (306-1) du module de boîtier (300) et dans la direction opposée (-B) par le deuxième côté large (306-2) du module de boîtier (300) agencé de manière adjacente.

5. Module de boîtier (300) selon l'une quelconque des revendications précédentes, dans lequel le module de boîtier (300) est prévu et conçu afin de recevoir et de retenir des composants d'un disjoncteur de protection de ligne ou d'un disjoncteur différentiel et/ou d'un disjoncteur de protection contre l'incendie.

6. Boîtier modulaire en matériau isolant (200) pour un disjoncteur basse tension multipolaire modulaire (100), présentant un côté avant (303), un côté de fixation (304) opposée au côté avant (303), et des côtés étroits et larges (305-1, 305-2, 306-1, 306-2) reliant le côté avant et le côté de fixation (303, 304),
- dans lequel le boîtier en matériau isolant (200) est formé d'un premier module de boîtier (300-1) selon l'une quelconque des revendications 1 à 5 et d'au moins un deuxième module de boîtier (300-2) supplémentaire selon l'une quelconque des revendications 1 à 5 agencé à côté dudit premier module de boîtier dans une direction de largeur (B) et fixé audit premier module de boîtier,
- dans lequel le deuxième module de boîtier (300-2) est prévu et conçu afin de recevoir et de retenir un contact de commutation (108), et
- dans lequel un canal d'échappement (310) est formé entre le premier module de boîtier (300-1) et le deuxième module de boîtier (300-2) afin de guider, au niveau du premier côté étroit (305-1) et hors du boîtier en matériau isolant (200), des gaz de commutation apparaissant lors de l'ouverture du contact de commutation (108).

7. Boîtier modulaire en matériau isolant (200) selon la revendication 6, comprenant au moins un troisième module de boîtier (300-3) supplémentaire formé selon l'une quelconque des revendications 1 à 5 qui est agencé à côté du deuxième module de boîtier (300-2) dans la direction de largeur (B),
dans lequel le troisième module de boîtier (300-3) est prévu et conçu afin de recevoir et de retenir un contact de commutation (108),
dans lequel un canal d'échappement (310) supplémentaire est formé entre le deuxième module de boîtier (300-2) et le troisième module de boîtier (300-3) afin de guider, au niveau du premier côté étroit (305-1) et hors du boîtier en matériau isolant (200), des gaz de commutation apparaissant lors de l'ouverture du contact de commutation (108).

8. Boîtier modulaire en matériau isolant (200) selon l'une quelconque des revendications 6 ou 7, présentant un couvercle recouvrant au moins partiellement le premier côté large (306-1) du premier module de boîtier (300-1).

9. Disjoncteur basse tension modulaire multipolaire (100), comprenant un boîtier en matériau isolant (200) selon l'une quelconque des revendications 6 à 8 formé de plusieurs modules de boîtier (300-1, 300-2, 300-3, 300-4) selon l'une quelconque des revendications 1 à 5.

10. Disjoncteur basse tension modulaire multipolaire (100) selon la revendication 9, dans lequel le disjoncteur (100) est réalisé sous la forme d'un disjoncteur de protection de ligne à deux, trois ou quatre pôles et présente en conséquence deux, trois ou quatre modules de boîtier (300-1, 300-2, 300-3, 300-4) identiques qui sont agencés et fixés les uns aux autres côte à côte côté large contre côté large, dans lequel un canal d'échappement (310) respectif est formé entre deux modules de boîtier (300-1, 300-2, 300-3, 300-4) adjacents.

11. Disjoncteur basse tension modulaire multipolaire (100) selon la revendication 9, dans lequel le disjoncteur (100) est réalisé sous la forme d'un disjoncteur différentiel à deux, trois ou quatre pôles et présente :
- un premier module de boîtier (300-1) au sein duquel sont accueillis et retenus des composants de détection et de déclenchement en cas d'apparition d'un courant de défaut, et
- un à trois modules de boîtier (300-2, 300-3, 300-4) supplémentaires au sein desquels sont accueillis et retenus des composants de détection et de déclenchement en cas d'apparition d'un court-circuit ou d'une surcharge électrique,
dans lequel le premier module de boîtier (300-1) et les un à trois modules de boîtier (300-2, 300-3, 300-4) supplémentaires sont agencés et fixés les uns aux autres côte à côte côté large contre côté large, dans lequel un canal d'échappement (310) respectif est formé entre deux modules de boîtier (300-1, 300-2, 300-3, 300-4) adjacents.

12. Disjoncteur basse tension modulaire multipolaire (100) selon la revendication 11, dans lequel un transformateur de courant sommateur (130) du disjoncteur différentiel multipolaire est agencé dans un cinquième espace de réception (325) englobant le module de boîtier.

13. Disjoncteur basse tension modulaire multipolaire (100) selon l'une quelconque des revendications 9 à 12, dans lequel un constituant plat (140) est agencé dans le quatrième espace de réception (324) d'au moins un des modules de boîtier (300-1, 300-2, 300-3, 300-4).

14. Disjoncteur basse tension multipolaire modulaire (100) selon l'une quelconque des revendications 9 à 12, dans lequel le premier côté large (306-1), tourné vers l'extérieur, du premier module de boîtier (300-1) est au moins partiellement recouvert par un couvercle.
